Europäisches Patentamt

**European Patent Office**

**Office européen des brevets**

(19)

(11) Numéro de publication: **0 010 003**

**A1**

(12) # DEMANDE DE BREVET EUROPEEN

(21) Numéro de dépôt: **79400110.7**

(22) Date de dépôt: **23.02.79**

(51) Int. Cl.³: **G 01 P 13/00**
**G 01 P 15/08, G 08 B 21/00**

(30) Priorité: **19.09.78 FR 7826759**

(43) Date de publication de la demande:
**16.04.80 Bulletin 80/8**

(84) Etats Contractants Désignés:
**BE CH DE GB IT LU NL SE**

(71) Demandeur: **SOCIETE D'ETUDES TECHNIQUES ET COMMERCIALES D'AUTOMATION S.E.T.E.C.A. (Société Anonyme)**
**150, Grand'Rue**
**Heillecourt F-54140 Jarville(FR)**

(72) Inventeur: **Dumont, Claude**
**27, rue de la Tournelle Heillecourt**
**F-54140 Jarville(FR)**

(74) Mandataire: **Aubertin, François**
**Cabinet Bugnion Associes S.A.R.L. 4, rue de Haguenau**
**F-67000 Strasbourg(FR)**

(54) **Dispositif permettant l'obtention d'un signal électrique proportionnel à une quantité de mouvements et par là même capable de détecter tout mouvement ou accélération.**

(57) L'invention concerne un dispositif permettant l'obtention d'un signal électrique proportionnel à une quantité de mouvement et, par là même, capable de détecter tout mouvement, et adapté notamment à un appareil de signalisation individuel pour la détection rapide d'accident.

Ce dispositif est caractérisé par le fait que, d'une part, il comporte une bille (119) noyée dans un champ photoélectrique et pouvant se mouvoir dans l'espace, et que donc le champ recu est proportionnel au mouvement, et en ce que, d'autre part, la détection du mouvement peut se réaliser dans l'espace et que celle-ci est programmable.

L'invention concerne la détection d'un mouvement programmable.

./...

FIG. 1

- 1 -

Dispositif permettant l'obtention d'un signal électrique proportionnel à une quantité de mouvements et par là même capable de détecter tout mouvement ou accélération

L'invention concerne un dispositif permettant l'obtention d'un signal électrique proportionnel à une quantité de mouvement et, par là même, capable de détecter tout mouvement, et adapté notamment à un appareil de signalisation individuel pour la détection rapide d'accident.

On connaît déjà un appareil de signalisation individuel pour la détection rapide d'accident correspondant au préambule de la revendication 1 (brevet français n° 75.18990). Cet appareil comporte, d'une part, un émetteur porté par l'opérateur et délivrant en permanence un signal haute fréquence, cet émetteur étant commandé par un interrupteur coupant et rétablissant l'émission du signal haute fréquence, d'une manière aléatoire, en fonction des mouvements de l'opérateur et, d'autre part, un récepteur pouvant être placé à un endroit quelconque de la zone d'utilisation et comportant une minuterie fonctionnant en permanence à partir de chaque arrêt de la réception du signal haute fréquence et commandant l'émission d'un signal sonore d'alerte après l'écoulement d'une période de temps prédéterminée.

La présente invention concerne les instruments et capteurs permettant de fournir un signal électrique ayant une relation avec un mouvement, donc une vitesse ou accélération et notamment l'appareil indiqué ci-dessus.

Dans les dispositifs connus de ce genre, la détection de mouvement n'est pas programmable, et ne fonctionne que lorsque le mouvement est donné dans une position de l'espace bien défini, c'est-à-dire des positions d'un individu ou d'une machine suivant des axes préférentiels. Ces systèmes utilisent en général le mercure enfermé dans une ampoule de verre et dont l'information du mouvement est donné en tout ou rien.

Le dispositif suivant l'invention permet d'éviter ces inconvénients. Dans celui-ci, en effet, il est possible de détecter un mouvement dans n'importe quelle position, d'avoir un système qui donne un signal électrique sensiblement proportionnel au mouvement et par là même, une programmation de la quantité de mouvement que l'on désire détecter.

A cet effet, l'invention concerne un dispositif permettant l'obtention d'un signal électrique, proportionnel à une quantité de mouvement et, par là même, capable de détecter tout mouvement, et adapté à un appareil de signalisation individuel pour la détection rapide d'accident et comportant, d'une part, un émetteur porté par l'opérateur et délivrant en permanence un signal haute fréquence, cet émetteur étant commandé par un interrupteur coupant et rétablissant l'émission du signal haute fréquence, d'une manière aléatoire, en fonction des mouvements de l'opérateur et, d'autre part, un récepteur pouvant être placé à un endroit quelconque de la zone d'utilisation et comportant une minuterie fonctionnant en permanence à partir de chaque arrêt de la réception du signal haute fréquence et commandant l'émission d'un signal sonore d'alerte après l'écoulement d'une période de temps prédéterminée, dispositif caractérisé par le fait que, d'une part, il comporte une bille noyée dans un champ photo-électrique et pouvant se mouvoir dans l'espace, et que donc le champ reçu est proportionnel au mouvement, et que, d'autre part, la détection du mouvement peut se réaliser dans l'espace et que celle-ci est programmable.

Selon une réalisation de l'invention, le capteur est composé d'une bille pouvant se mouvoir dans un espace cylindrique, cet espace étant balayé par un champ photo-électrique perpendiculaire à l'axe de ce cylindre, le mouvement de la bille provoquant une variation instantanée du champ proportionnel à la quantité de mouvement donné par la bille.

L'électronique est composée d'une amplification, d'un circuit filtre permettant de s'affranchir de la condition initiale au repos, condition initiale donnée sans mouvement et qui est différente suivant la position de la bille dans le champ par rapport à la position du capteur dans l'espace, ainsi qu'un circuit de programmation de la quantité de mouvement que l'on souhaite détecter.

Dans ce qui suit, l'invention est exposée plus en détail à l'aide de dessins représentant seulement un mode d'exécution.

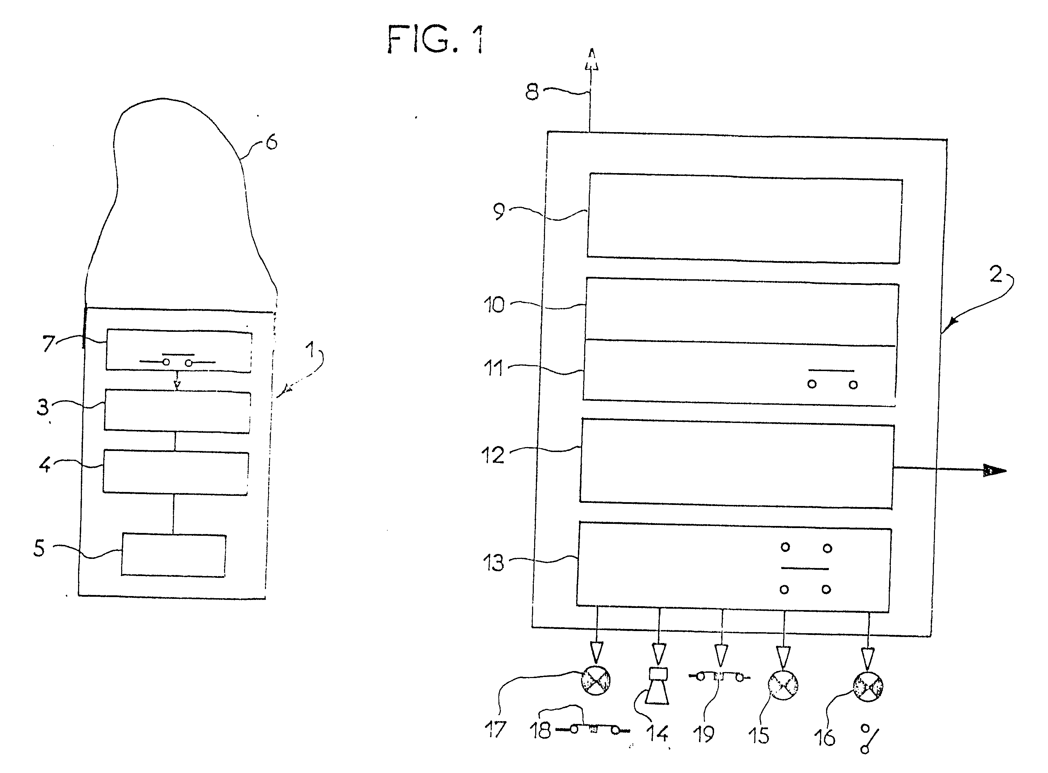

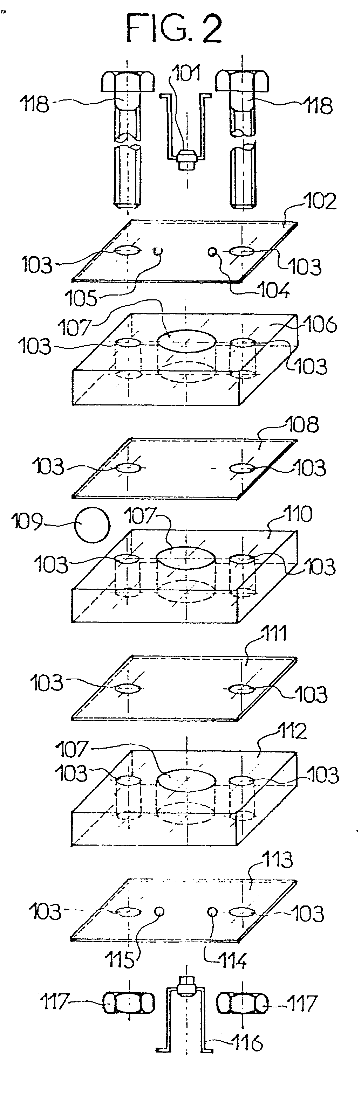

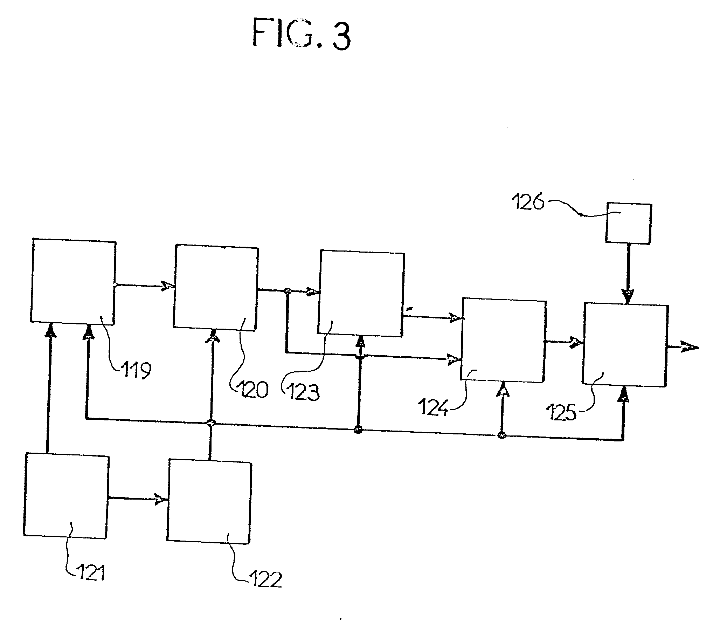

La figure 1 est un schéma synoptique d'un appareil de signalisation individuel ; la figure 2 représente un mode de réalisation du capteur, élément du dispositif comprenant le capteur et son électronique associée ; la figure 3 représente un mode de réalisation du dispositif conforme à l'invention.

L'appareil représenté dans la figure 1 comporte essentiellement deux parties distinctes, à savoir, d'une part, un ensemble émetteur 1 porté par l'opérateur dont les accidents éventuels doivent être rapidement détectés et, d'autre part, un ensemble récepteur 2.

L'ensemble émetteur 1 comporte un émetteur proprement dit 3 relié à un échantillonneur 4 et alimenté par une batterie 5. Cet émetteur est connecté à une antenne 6 du type baudrier et il produit une porteuse à haute fréquence, par exemple de 27 MHZ. Cet émetteur 3 fonctionne sous la commande d'un capteur 119 qui ferme son contact quand l'opérateur est en mouvement.

Tel qu'il est représenté dans les figures 2 et 3, le dispositif comporte un capteur 119 composé de l'assemblage du circuit imprimé 102 sur lequel est montée une diode d'émission 101 de longueur d'onde comprise entre 500 et 1200 manomètres ; du circuit imprimé 113 sur lequel est monté un photo-transistor 116, les circuits 101 et 116 sont assemblés avec entre-eux les éléments 106, plaque de métal ou autre matière percée en 107 ; de l'élément 108 transparent, du 110 dito 106, du 111 dito 108, du 112 dito 106. Entre 108 et 111 est incorporée une bille 109 qui évoluera dans le passage cylindrique 107 de 110. L'ensemble est maintenu par des vis 118 passant par les trous 103 et bloqué par les écrous 117.

Le champ photo-électrique émis par 101 et perpendiculaire à l'axe constitué par 107 est coupé par la bille 109.

Le photo-transistor 116 reçoit alors un gradient du champ provoqué par le mouvement de la bille 109. Le signal électrique restitué par le photo-transistor est proportionnel au mouvement.

L'électronique associée traite alors le signal analogique obtenu, d'une part, en alimentant la diode d'émission par 121 qui est une batterie et le photo-transistor et les autres circuits par 122 qui est une alimentation en + ou - avec référentiel zéro. Le signal électrique du gradient du champ est alors amplifié par 120 qui peut être un amplificateur linéaire. La condition initiale est extraite par 123 qui peut être un filtre amplificateur linéaire. Le circuit 124 est un soustracteur linéaire qui ramène la variation du champ à un référentiel fixe indépendant de la condition initiale. Le circuit 125 est un comparateur qui donne un signal électrique pour un mouvement supérieur à celui programmé par l'élément 126 qui est un potentiomètre donnant le seuil de comparaison entre une valeur électrique fixe et la variation du champ, donc du mouvement variable.

Le dispositif, objet de l'invention, peut être utilisé dans tous les cas où il y a un mouvement à détecter. Il peut être utilisé pour la détection de mouvement d'un homme dans le cadre d'une protection de travailleur isolé, la détection de vibration mécanique et tout système ou élément étant sujet à un mouvement.

L'ensemble récepteur 2 comprend une antenne réceptrice 8, un récepteur proprement dit 10 et un décodeur 11. Il peut également comporter une batterie 9 et un chargeur de batterie 12 utilisable également pour recharger la batterie 5 de l'émetteur.

Un élément important de l'ensemble récepteur 2 est constitué par une minuterie 13 comportant plusieurs sorties. L'une de ces sorties est reliée à un avertisseur sonore 14, une autre à une lampe 15, lesquelles sont mises en service après l'écoulement d'une période de temps prédéterminée, par exemple de l'ordre de vingt à trente secondes après l'arrêt de toute réception. La minuterie est également connectée à une lampe témoin de marche-arrêt 16 et une lampe témoin 17 de préalarme à laquelle est associé un bouton-poussoir 18. Un autre bouton-poussoir de réarmement supplémentaire 19 peut être prévu.

Le fonctionnement de l'appareil suivant l'invention est le suivant :
- tant que l'opérateur est en mouvement, l'interrupteur est fermé et l'émetteur 3 délivre en permanence une porteuse haute fréquence de 27 MHZ. Cet interrupteur coupe, d'une façon aléatoire, l'émission de la porteuse, en fonction des mouvements de l'opérateur, puis provoque le rétablissement de l'émission. L'arrêt permanent de l'émission ne se produit que si l'opérateur est en position pratiquement immobile.

Dans l'ensemble récepteur 2, la minuterie 13 n'est pas enclenchée tant que le récepteur 10 reçoit la porteuse haute fréquence, c'est-à-dire tant que l'opérateur est en mouvement.

Par contre, dès que l'interrupteur coupe, par suite de l'immobilité de l'opérateur, l'émission de la porteuse haute fréquence, cet arrêt du signal est détecté par le récepteur 10 et le décodeur 11, ce qui provoque l'enclenchement de la minuterie 13. Si l'arrêt de la porteuse haute fréquence se poursuit pendant une période de temps prédéterminée, par exemple de l'ordre de vingt à trente secondes, la minuterie 13 émet, à l'expiration de cette période, un signal de préalarme, au moyen de l'avertisseur 14 sonore et/ou lumineux au moyen de la lampe 15. Ce signal avertit l'opérateur que l'ensemble 1 n'émet plus la porteuse haute fréquence.

Si l'opérateur n'est pas blessé, il lui suffit de se remettre en mouvement pour émettre un instant et alors la minuterie 13 est remise à zéro automatiquement.

Par contre, si l'opérateur ne bouge pas après la première période de temps de vingt à trente secondes, par exemple à la suite d'un accident, la minuterie 13 commande le déclenchement d'une alarme générale qui peut comporter un avertisseur d'alarme puissant. L'ensemble récepteur 2 comporte le bouton 18 qui permet d'effacer l'alarme.

On utilise le secteur pour alimenter l'ensemble récepteur 2 et, éventuellement, recharger les batteries. Sinon, on utilise un chargeur. Toutefois, l'autonomie est calculée afin de permettre de tenir pendant un poste de travail à pleine émission.

0010003

Revendications de brevet

1. Dispositif permettant l'obtention d'un signal électrique, proportionnel à une quantité de mouvement et, par là même, capable de détecter tout mouvement, et adapté à un appareil de signalisation individuel pour la détection rapide d'accident et comportant, d'une part, un émetteur (1) porté par l'opérateur et délivrant en permanence un signal haute fréquence, cet émetteur étant commandé par un interrupteur coupant et rétablissant l'émission du signal haute fréquence, d'une manière aléatoire, en fonction des mouvements de l'opérateur et, d'autre part, un récepteur (2) pouvant être placé à un endroit quelconque de la zone d'utilisation et comportant une minuterie (13) fonctionnant en permanence à partir de chaque arrêt de la réception du signal haute fréquence et commandant l'émission d'un signal sonore d'alerte après l'écoulement d'une période de temps prédéterminée, dispositif caractérisé par le fait qu'il comporte une bille (119) noyée dans un champ photo-électrique et pouvant se mouvoir dans l'espace et que donc le champ reçu est proportionnel au mouvement, et en ce que la détection du mouvement peut se réaliser dans l'espace et que celle-ci est programmable.

2. Dispositif selon 1, caractérisé par le fait que le moyen destiné à la détection du mouvement est une bille (119) se mouvant dans un champ photo-électrique.

3. Dispositif selon 2, caractérisé par le fait que l'élément transmettant physiquement le mouvement est une bille (119) placée dans un cylindre (107) avec un champ perpendiculaire à son axe permettant la détection dans l'espace.

4. Dispositif selon 3, caractérisé par le fait que le circuit électronique qui est un filtre associé à un amplificateur (120) et un soustracteur (124) permet de s'affranchir de la condition initiale.

5. Dispositif selon 4, caractérisé par le fait que le circuit électronique de comparaison permet la programmation de la quantité de mouvement à détecter.

FIG. 1

0010003

FIG. 2

FIG.3

0010003

Numéro de la demande

Office européen
des brevets

**RAPPORT DE RECHERCHE EUROPEENNE**

EP 79 40 0110

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| | FR - A - 2 355 113 (BAUMGARTNER) <br> * Page 4, lignes 5-37 * | 1-3 | G 01 P 13/00 <br> 15/08 |
| | US - A - 3 148 456 (A. LAROY BROWNING) <br> * Colonne 7, lignes 24-38 * | 1-3 | |
| D | FR - A - 2 314 548 (SETECA) <br> * Page 1, ligne 37 - page 3, ligne 8 * | 1 | DOMAINES TECHNIQUES RECHERCHES (Int. Cl. 3) |
| | US - A - 3 967 135 (BALBAN et al.) <br> * Colonne 2, lignes 5-29 * | 1,2,5 | G 01 P 13/00 <br> 15/08 <br> G 08 B |
| | FR - A - 2 291 064 (MESSERSCHMITT-BOLKOW-BLOHM) <br> * Page 4, ligne 21 - page 5, ligne 37 * | 4,5 | |
| | ---- | | |
| | | | CATEGORIE DES DOCUMENTS CITES |
| | | | X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| | Le présent rapport de recherche a été établi pour toutes les revendications | | &: membre de la même famille, document correspondant |
| Lieu de la recherche <br> La Haye | Date d'achevement de la recherche <br> 27-12-1979 | Examinateur <br> DE BUYZER | |